# EUROPEAN PATENT SPECIFICATION

(11) **EP 0 810 677 B1**
(45) Date of publication and mention of the grant of the patent: **15.03.2000**
(21) Application number: 96941834.2
(22) Date of filing: 11.12.1996
(51) Int. Cl.: H01M 2/12, H01M 2/34

(54) **THIN BATTERY WITH ANTI-EXPLOSION VALVE**
DÜNNE BATTERIE MIT UEBERDRUCKVENTIL
BATTERIE DE FAIBLE EPAISSEUR

(30) Priority: 19.12.1995 JP 33001495
(43) Date of publication of application: 03.12.1997
(73) Proprietor: MATSUSHITA ELECTRIC INDUSTRIAL CO., LTD., Kadoma-shi, Osaka-fu, 571 (JP)
(72) Inventor: KOZUKI, Kiyomi, Moriguchi-shi, Osaka 570 (JP); NISHIMURA, Yoshiko, Sakai-shi, Osaka 590-01 (JP); IIDA, Rikio, Ikoma-shi, Nar 630-11 (JP); FUJII, Takabumi, Suita-shi, Osaka 565 (JP); SAITO, Kazuo, Kadoma-shi, Osaka 571 (JP); KUNOIKE, Naoto, Osaka-shi, Osaka 547 (JP); TAKAI, Tohru, Kyoto-shi, Kyoto 613 (JP); MASUMOTO, Kenjin, Kishiwada-shi, Osaka 596 (JP); NIWA, Yukimasa, Suita-shi, Osaka 565 (JP)
(74) Representative: Kügele, Bernhard
(86) International application number: JP9603615
(87) International publication number: WO9723009

(56) References cited:
- EP-A- 0 573 998
- JP-A- 6 203 818
- JP-A- 6 231 743
- JP-A- 7 105 933
- JP-A- 8 115 714
- JP-A- 8 306 351
- PATENT ABSTRACTS OF JAPAN vol. 018, no. 573 (E-1624), 2 November 1994 & JP 06 215747 A (MATSUSHITA ELECTRIC IND CO LTD), 5 August 1994,
- PATENT ABSTRACTS OF JAPAN vol. 014, no. 336 (E-0953), 19 July 1990 & JP 02 112151 A (SONY CORP), 24 April 1990,

## Description

### Technical Field

The present invention relates to a thin type battery, and more particularly to a sealing member having an explosion-proof function composed in a thin type battery.

### Background Art

Recently, in the cordless and portable trend of battery-operated appliances such as audio and video devices and personal computers, batteries of small size, light weight, and high energy density are demanded as their driving power sources. In particular, the lithium secondary battery is high in energy density, and is highly expected as the battery for next generation, and its latent market scale is great. Besides, from the viewpoint of thin design of appliances and effective use of space, there is a mounting demand for thin type of battery.

However, the enclosed type battery, for example, the lithium secondary battery using lithium metal or carbon material as negative electrode has been known to have a problem of generation and accumulation of gas in the battery due to decomposition of electrolyte or active material when falling into a state of short-circuit, overcharging, or reverse charging.

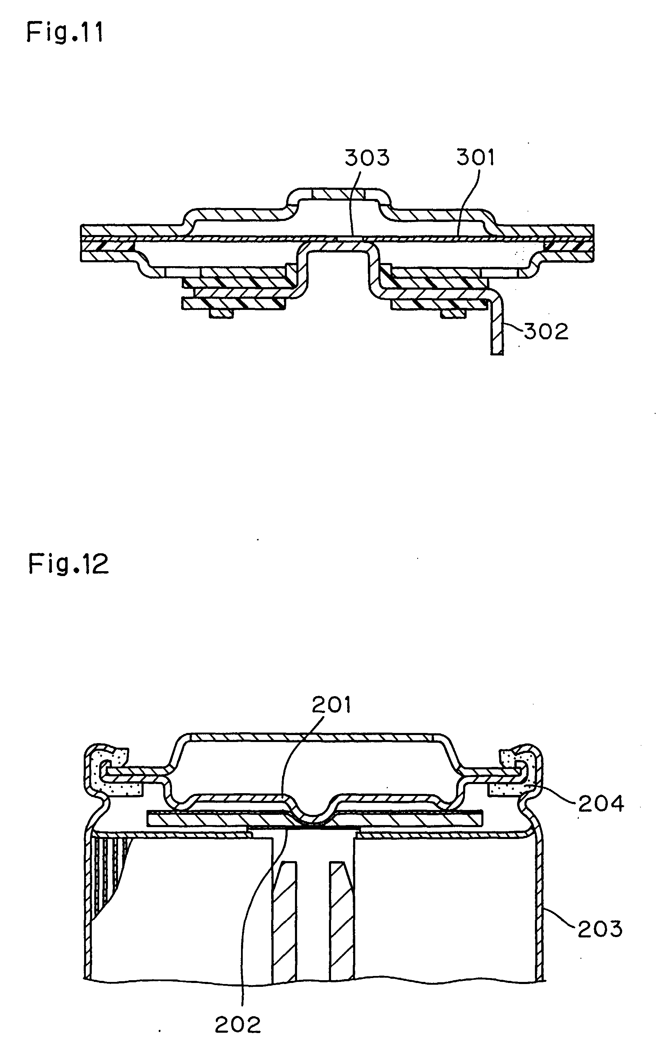

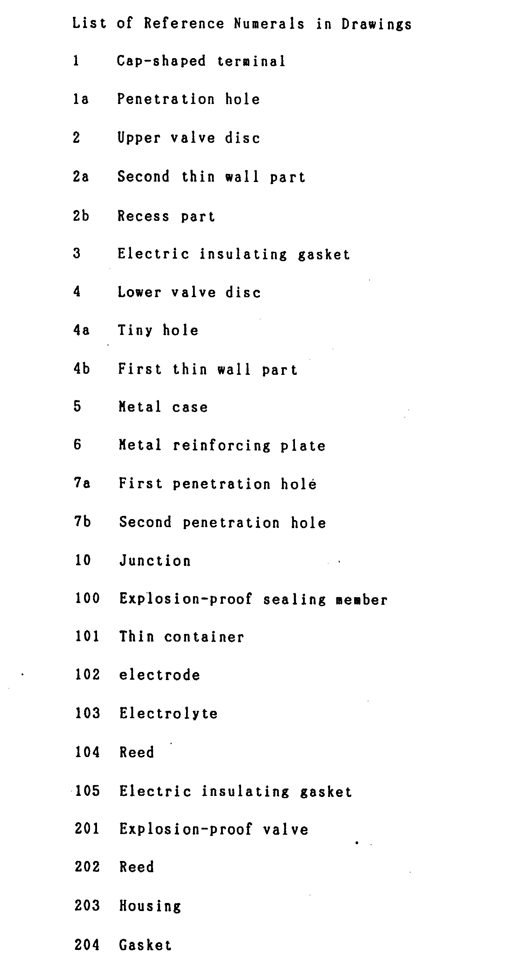

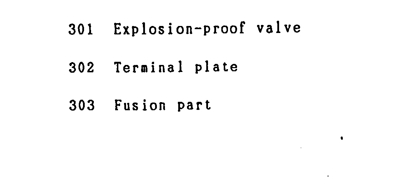

In the event of such short-circuit, overcharging, or reverse charging, to prevent explosion of battery, an explosion-proof device has been proposed, for example, as disclosed in Japanese Laid-open Patent 2-112151. That is, as shown in Fig. 12, a reed 202 is fitted to an explosion-proof valve 201 which is deformed as the internal pressure builds up, and when the internal pressure reaches a specified value, the reed 202 is separated from the explosion-proof valve 201 or torn apart, and the current is cut off. In Fig. 12, the explosion-proof valve 201 is installed in a housing 203 of the battery through a gasket 204. Such a type of explosion-proof device is also disclosed in JP-A-6 203 818 and JP-A-2 112 151.

In such constitution, however, when reaching the specified internal pressure, if the explosion-proof valve 201 is not securely set apart from the reed 202, or if a burr is formed by tearing, although the explosion-proof valve 201 has functioned, the conductive state between the explosion-proof valve 201 and reed 202 may be kept, and the state of short-circuit or the like may persist.

Or, when the explosion-proof device of such cylindrical battery is applied in an elliptical sealing plate of small width dimension as used in thin type battery, since the effective receiving surface of gas pressure is small and the width is narrow in the elliptical sealing plate, deformation of the metal explosion-proof valve by elevation of internal pressure is insufficient, and the explosion-proof valve may fail to work in spite of high internal pressure of battery. Besides, in the thin type battery, sine the proof pressure of the battery case is lower than in the cylindrical battery, the operating pressure of the explosion-proof valve must be set lower than in the cylindrical battery. Accordingly, it is required to reduce the thickness of the elastic metal explosion-proof valve so as to increase deformation of explosion-proof valve due to elevation of internal pressure.

Moreover, in the state of low internal pressure of battery, if the thickness of the explosion-proof valve is reduced in order to deform the metal explosion-proof valve sufficiently, fluctuations occur in the operating pressure of the explosion-proof valve, and the explosion-proof valve may not function securely.

On the other hand, an explosion-proof device as shown in Fig. 11 has been also proposed. In Fig. 11, a part of an explosion-proof valve 301 is electrically connected with the upper part of a protrusion of a terminal plate 302 through a fusion part 303. As gas is accumulated in the battery, the explosion-proof valve 301 is deformed upward, and when the internal pressure reaches a specified value, the fusion part 303 is torn apart, and the terminal plate 302 and explosion-proof valve 301 are separated from each other, so that the explosion-proof valve 301 is electrically disconnected from the terminal plate 302. Such a type of explosion-proof device is also disclosed in JP-A-7 105 933 and JP-A-6 215 747.

In this structure, too, when the internal pressure of the battery climbs up, due to insufficient deformation of the metal explosion-proof valve and uneven fusion strength, especially if reaching up to the specified battery internal pressure, the central fusion part of the explosion-proof valve may not be torn apart, and the electric connection in the battery may not be cut off securely.

In the thin type battery, yet, since the width direction dimension is small and the strength is weak, when sealing by crimping, the parts contained inside may be deformed, and since gas is discharged, the thin wall part of electric connection part may often fall in trouble.

### Disclosure of the Invention

It is hence an object of the invention to provide an explosion-proof sealing member for thin type battery, capable of assuring safety and reliability of battery, by operating the valve of a sealing member securely to cut off electrical connection when the internal pressure of the battery is raised due to short-circuit, overcharging or reverse charging.

The thin type battery of the invention comprises (1) a first container having a first opening in an upper surface, (2) an electrode contained in the first container, (3) an electrolyte contained in the first container, and (4) a sealing member.

The sealing member comprises (a) a second container made of metal having a penetration hole in a bottom surface and having a second opening in an upper surface, (b) a lower valve disc of conductive property installed at the bottom side in the second container, (c) an electric insulating gasket installed in an upper peripheral region of the lower valve disc, (d) an upper valve disc of conductive property installed at an upper side of the electric insulating gasket, and (e) a cap-shaped terminal of conductive property installed at the upper side of the upper valve disc, and installed in the second opening.

The periphery of the second container is sealed by crimping by containing together each periphery of the lower valve disc, the electric insulating gasket, the upper valve disc, and the cap-shaped terminal. In this state, the upper valve disc and the cap-shaped terminal conduct with each other electrically, the cap-shaped terminal and the second container are insulated from each other electrically, and the lower valve disc and the second container conduct with each other electrically. The lower valve disc forms a first thin wall part at a position corresponding to the penetration hole. The upper valve disc and the lower valve disc have a junction electrically and integrally joining the first thin wall part and a first region of the upper valve disc.

In the constitution of the invention, when the battery internal pressure is raised by short-circuit, overcharging, or reverse charging, the upper valve disk containing the junction is deformed outside, and by this deforming stress, the first thin wall part containing the junction is torn apart and separated from the lower valve disc. As a result, the upper valve disc and the lower disc are electrically isolated from each other.

In this constitution, preferably, the upper valve disc should form a second thin wall part in a second region. Accordingly, the gas generated in the battery passes through the torn first thin wall part, tears apart the second thin wall part, and the gas further passes through the torn second thin wall part, and is discharged outside of the battery. As a result, sudden temperature rise of the battery or elevation of internal pressure of battery can be effectively prevented.

In the constitution, preferably, a tiny hole continuous to the first thin wall part should be formed in the lower valve disc. Accordingly, the first thin wall part passing through the tiny hole is completely torn apart, and formation of burr or the like is prevented. Therefore, it eliminates defects of keeping conductive state by untorn portion or burr, so that the electric conduction between the lower valve disc and upper valve disc may be completely cut off. Still more, through the tiny hole, the gas pressure can be transmitted to the upper valve disc more quickly, and the upper valve disc can be deformed, and by this deforming stress, the first thin wall part is torn apart from the lower valve disc. Incidentally, by adjusting the thickness or length of the first thin wall part of the lower valve disc, the pressure for cutting off the electric connection can be set arbitrarily.

In the constitution, preferably, concerning the deforming strength of valve discs upon elevation of internal pressure, the strength of the lower valve disc should be larger than the strength of the upper valve disc. Accordingly, deformation of the lower valve disc due to elevation of internal pressure of battery is suppressed, and contact of the upper valve disc and lower valve disc after cutting off can be prevented.

In the constitution, preferably, the first region of the upper valve disc should be in a recess shape, and the bottom of this recess shape and the thin wall part of the lower valve disc should be electrically joined to form a junction by laser welding, ultrasonic welding, resistance welding, fusing, soldering or other joining means. Accordingly, if the internal pressure of the battery is raised, the junction is pushed up from downward to upward. When reaching the specified internal pressure, the junction in the recess shape is largely inverted from downward to upward, and by this inverting stress, the first thin wall part is torn apart, and is separated from the lower valve disc. As a result, the electric contact of the upper valve disc and lower valve disc can be completely prevented.

In the constitution, preferably, a metal reinforcing plate should be disposed between the periphery of the cap-shaped terminal and the upper valve disc. Accordingly, when sealing by crimping, the reinforcing plate supports the pressure from the peripheral edge, and the deformation of the upper valve disc and lower valve disc is suppressed, so that the upper valve disc and lower valve disc small in mechanical distortion can be obtained.

In the constitution, preferably, a PTC (positive temperature coefficient) thermistor element should be disposed in the space between the cap-shaped terminal and upper valve disc. Accordingly, the PTC thermistor element detects the temperature, and generation of excessive current can be prevented.

### Brief Description of the Drawings

Fig. 1 is a side sectional view showing an embodiment of an explosion-proof sealing member used in a thin type battery of the invention.

Fig. 2 is a perspective exploded view of the sealing member in Fig. 1.

Fig. 3 shows a perspective view and a side sectional view of an embodiment showing a first thin wall part of an upper valve disc composed in the sealing member used in the thin type battery of the invention.

Fig. 4 shows a perspective view and a side sectional view of other embodiment showing a first thin wall part of an upper valve disc composed in the sealing member used in the thin type battery of the invention.

Fig. 5 shows a perspective view and a side sectional view of an embodiment showing a recess part of an upper valve disc composed in the sealing member used in the thin type battery of the invention.

Fig. 6 shows a perspective view and a side sectional view of an embodiment showing a lower valve disc composed in the sealing member used in the thin type battery of the invention.

Fig. 7 shows a perspective view and a side sectional view of other embodiment showing a lower valve disc composed in the sealing member used in the thin type battery of the invention.

Fig. 8 shows a perspective view and a side sectional view of a different embodiment showing a lower valve disc composed in the sealing member used in the thin type battery of the invention.

Fig. 9 is a side sectional view of an embodiment of a metal reinforcing plate composed in the sealing member used in the thin type battery of the invention.

Fig. 10 is a schematic sectional view of essential parts of an embodiment of the thin type battery of the invention.

Fig. 11 is a side sectional view of a conventional sealing plate.

Fig. 12 is a side sectional view of a sealing plate of a conventional battery.

### Best Mode for Carrying Out the Invention

Referring now to the drawings, an embodiment of the invention is described in detail below.

### (Embodiment 1)

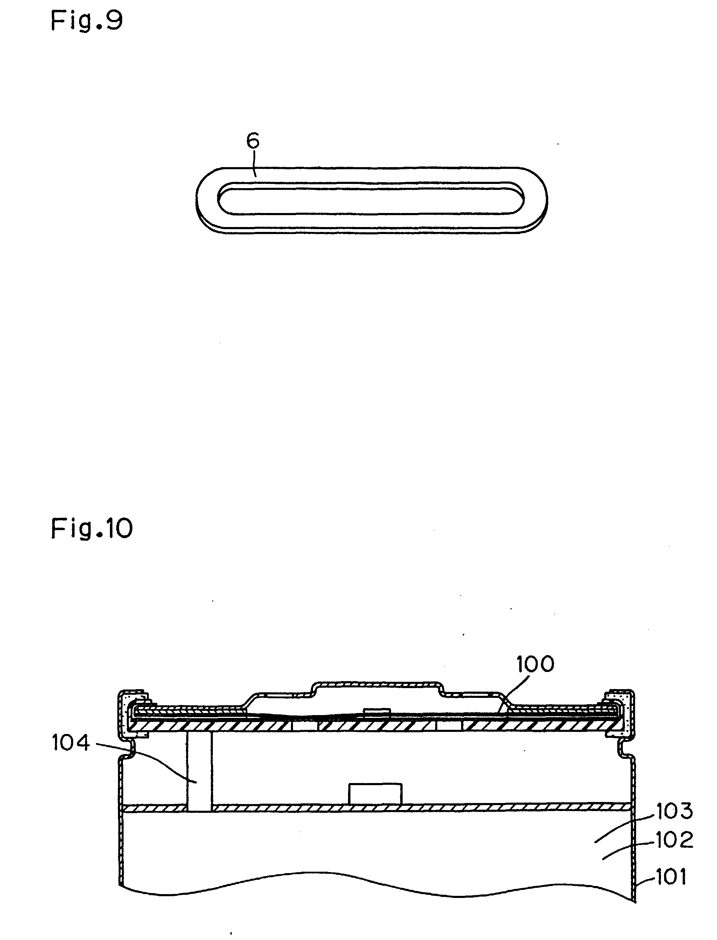

An essential sectional view of an embodiment of a battery of the invention is shown in Fig. 10. In Fig. 10, an electrode 102 and an electrolyte 103 are contained in a thin container 101 having an opening. The thin container 101 has an elliptical section. An explosion-proof sealing member 100 is disposed in the opening of the thin container 101 to seal through an insulating gasket 105. The electrode 102 is composed of a cathode and an anode through a separator. A part of the explosion-proof sealing member 100 is electrically connected to the electrode 102 through a reed 104.

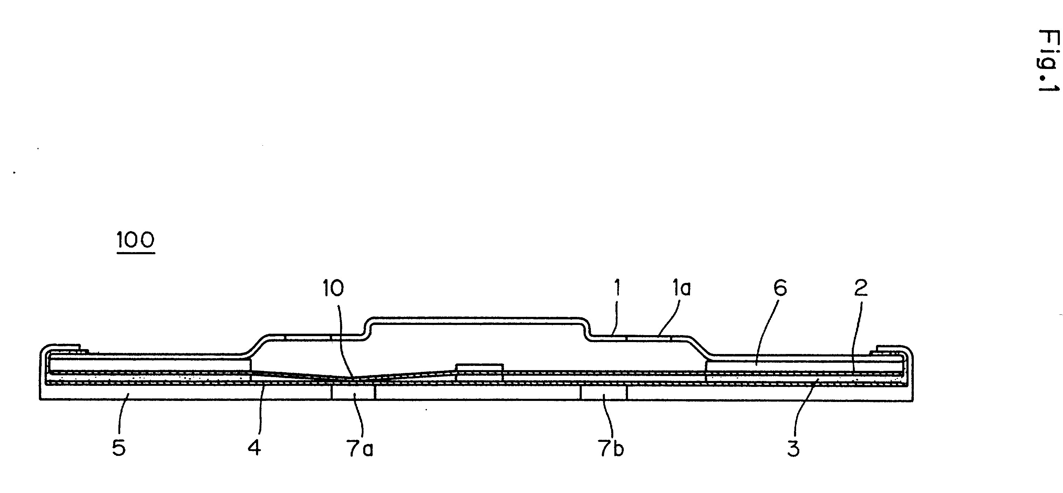

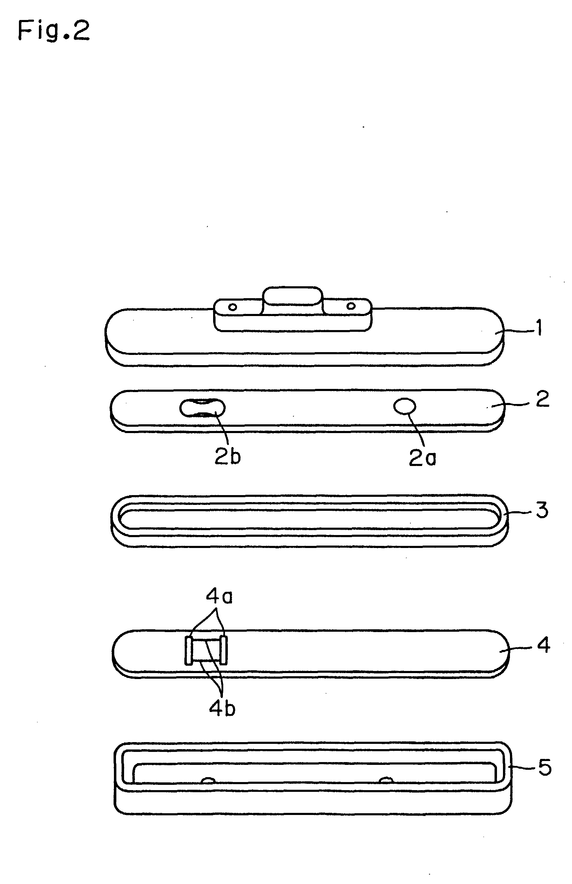

A detailed sectional view of the sealing member 100 is shown in Fig. 1. A perspective exploded view of the sealing member 100 is shown in Fig. 2. In Fig. 1 and Fig. 2, the sealing member 100 has an upper valve disc 2 and a lower valve disc 4 disposed through an insulating gasket 3 having an opening. That is, the lower valve disc 4 is disposed at the bottom of the inside of a metal case 5. An electric insulating gasket 3 is disposed in the periphery of the upper side of the lower valve disc 4. That is, the insulating gasket 3 has an opening in the center. In the upper side periphery of the lower valve disc 4, the upper valve disc 2 is disposed through the insulating gasket 3. A gap is formed between the lower valve disc 4 and upper valve disc 2, and they are mutually isolated electrically. A metal cap-shaped terminal 1 is disposed at the upper side of the cap-shaped terminal 1. The electric insulating gasket 3 is disposed in the upper side periphery of the cap-shaped terminal 1. The peripheral portion of the metal case 5 contains, crimps and seals integrally each periphery of the lower valve disc 4, insulating gasket 3, upper valve disc 2, cap-shaped terminal 1, and insulating gasket 3.

The metal case 5 has a first penetration hole 7a formed in a first region, and a second penetration hole 7b formed in a second region, at right and left symmetrical positions in its bottom. In use, only the first penetration hole 7a works effectively. In the constitution forming two penetration holes 7a, 7b in the metal case 5, when assembling the sealing member, it is not necessary to adjust the right and left positions, and assembling is easy.

The upper valve disc 2 forms a second thin wall part 2a and a recess part 2b. The lower valve disc 4 forms a tiny hole 4a, and a first thin wall part 4b continuous thereto. The first penetration hole 7a, first thin wall part 4b, and recess part 2b are formed at mutually corresponding positions. The inside portion of the first thin wall part 4b of the tiny hole 4a, and the recess part 2b of the upper valve disc 2 are fused to form a junction 10. By this junction 10, the lower valve disc 4 and upper valve disc 2 are electrically connected. The cap-shaped terminal 1 forms a penetration hole 1a.

In the case of an elliptical sealing member, when crimping and sealing the cap-shaped terminal 1, it is preferred to prevent deformation of the internal parts by supporting the pressure applied to the peripheral edge of the terminal. To prevent deformation, a reinforcing plate 6 is disposed between the periphery of the cap-shaped terminal 1 and the upper valve disc 2. The reinforcing plate 6 is made of metal as shown in Fig. 9, and has an opening in the center.

In this explosion-proof sealing member, a part of the metal case is welded to the reed 104 which is conductive with the plate 102, and the inside bottom of the metal case 5 and the lower valve disc 4 contact with each other. At the junction 10, the lower valve disc 4 and upper valve disc 2 conduct with each other electrically. The periphery of the upper valve disc 2 contacts with the metal cap-shaped terminal 1. The cap-shaped terminal 1 and metal case 5 are disposed through the insulating gasket 3, and are electrically isolated from each other.

In such constitution, when gas is generated and the internal pressure of the battery rises due to short-circuit, overcharging or reverse charging of the battery, the generated gas is transmitted from the first penetration hole 7a of the bottom of the metal case 5 to the junction 10, and the upper valve disc including the junction10 is deformed in the outside direction, and the first thin wall part 4b including the junction 10 is torn apart by the deforming stress, and is separated from the lower valve disc 4. As a result, the electric connection between the upper valve disc and lower valve disc is cut off, and the current is cut off.

Or, when the internal pressure of the battery is raised, the generated gas passes through the tiny hole 4a and enters the gap between the lower valve disc 4 and upper valve disc 2, and the second thin wall part 2a of the upper valve disc 2 is torn apart by this gas pressure. The generated gas passes through the hole in the second thin wall part, and is discharged outside of the battery.

The junction 10 is formed by fusing the bottom of the recess part 2b of the upper valve disc 2, and the portion enclosed by the tiny hole 4a formed in the lower valve disc 4 and the continuous thin wall part 4b by laser welding.

The upper valve disc 2 is preferably an elastic sheet. In this constitution, by the elevation of internal pressure, the upper valve disc 2 can be deformed sufficiently upward. In the embodiment, an aluminum foil was used as the upper valve disc 2.

In the embodiment, the upper valve disc 2 is made of aluminum, with tensile strength of 6 to 10 kgf/cm² and thickness of 0.10 mm. In this constitution, conduction after cutting off the electric connection of the upper valve disc 2 and lower valve disc 4 can be securely prevented.

The lower valve disc 4 should be preferably made of material stronger than the upper valve disc 2. In this constitution, the lower valve disc 4 is less likely to be deformed upward by elevation of battery internal pressure, and contact of the lower valve disc 4 and upper valve disc 2 can be completely prevented. Besides, when the internal pressure of the battery is raised, deformation of the lower valve disc 4 can be suppressed, and contact between the upper valve disc 2 and lower valve disc 4 after cutting off is prevented. In the embodiment, the lower valve disc 4 is made of an aluminum foil with tensile strength of 14 to 18 kgf/cm², and thickness of 0.10 mm.

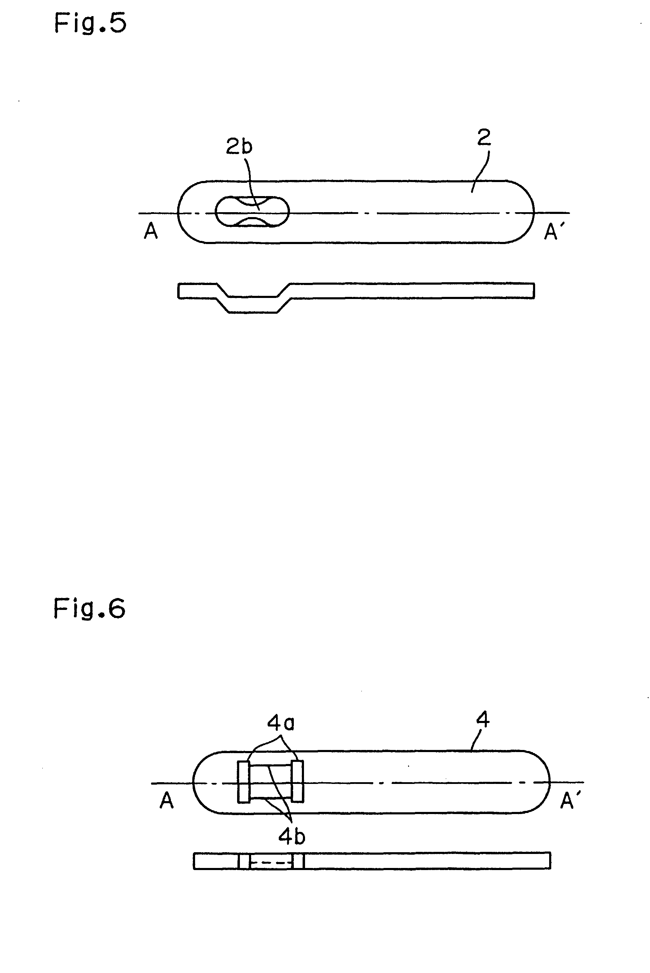

In the embodiment, as shown in Fig. 5, the recess part 2b is formed in a first region of the upper valve disc 2, and the bottom of this recess part 2b is fused to the first thin wall part 4b of the lower valve disc 4. In this constitution, when the internal pressure of the battery is raised, the recess part 2b of the upper valve disc 2 is inverted largely from downward to upward by the internal pressure so that the deformation of the upper valve disc 2 may be increased. By this inverting force, the first thin wall part 4b including the junction 10 is torn apart from the lower valve disc 4, so that the electric connection of the upper valve disc 2 and lower valve disc 4 can be completely prevented. The upper valve disc 2 is sufficiently deformed, and conduction after cutting off the electric junction 10 of the lower valve disc 4 and upper valve disc 2 can be prevented. By forming the recess part 2b in the upper valve disc 2, the adhesion and smoothness of the upper valve disc 2 and lower valve disc 4 are enhanced, and stable laser welding can be done.

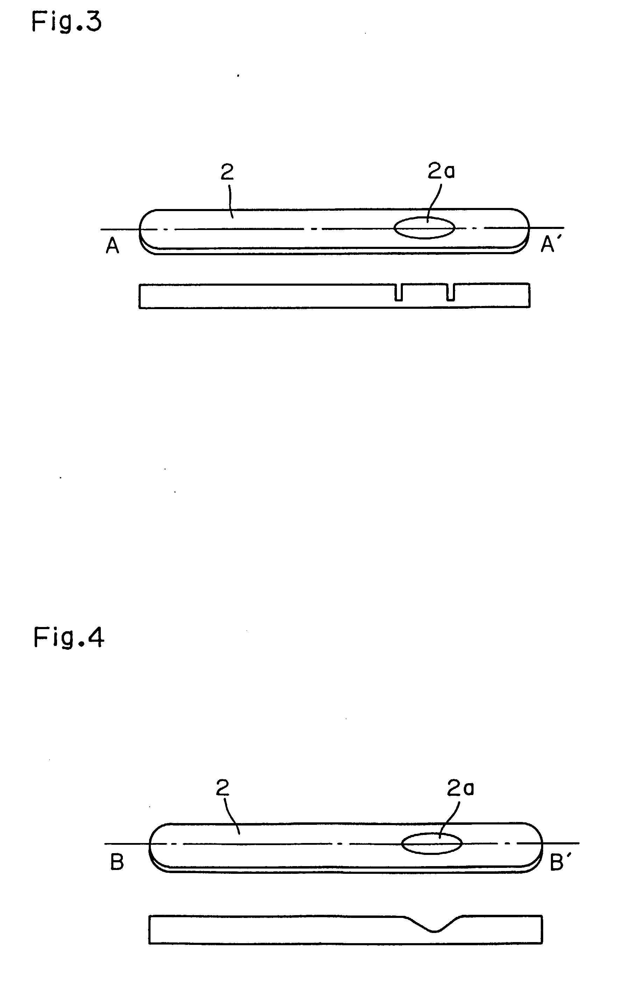

As a method of forming the second thin wall part 2a in the upper valve disc 2, the following methods are known. As shown in Fig. 3, a thin wall part of ring shape, circular shape, C-shape, or straight shape is formed by striking a metal punch or the like. Or, as shown in Fig. 4, a locally hemispherical thin wall portion is formed by applying an appropriate load by a steel ball. In this embodiment, the second thin wall part 2a was formed by using a circular metal punch as shown in Fig. 3. When the internal pressure of the battery exceeds a specified value, this thin wall part 2a is torn apart, and the gas in the battery is discharged outside of the battery.

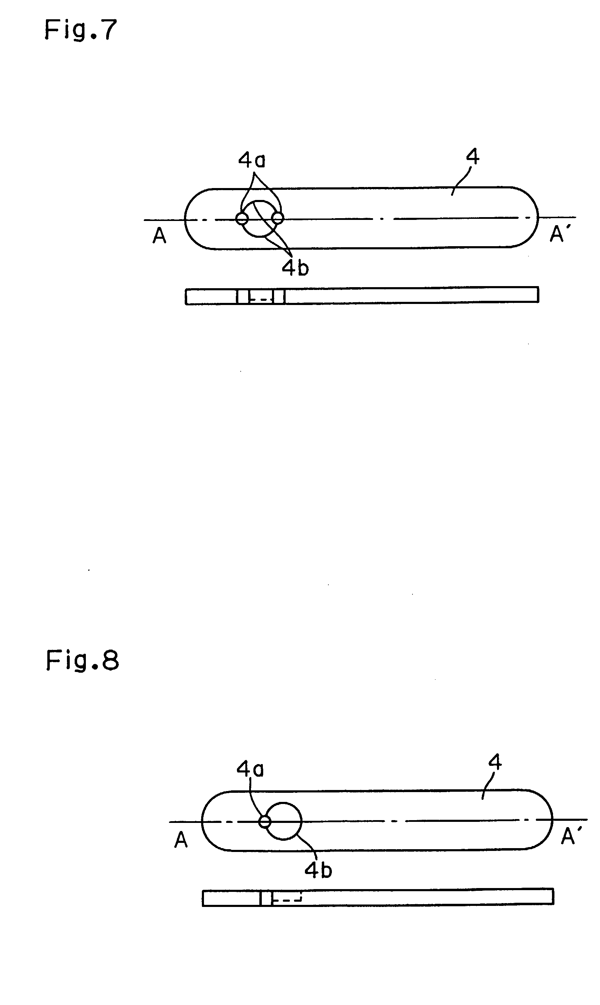

The tiny hole 4a and first thin wall part 4b provided in the lower valve disc 4 may be formed in various shaped as shown in Fig. 6, Fig. 7, and Fig. 8. In this embodiment, as shown in Fig. 6, two mutually confronting penetration grooves are arranged at an interval of 1.8 mm to form tiny holes 4a, and a rectangular first thin wall part 4b is formed between these two tiny holes 4a, so that the first thin wall part 4b may be continuous to the tiny holes 4a. The first thin wall part 4b may be also formed in a shape as shown in Fig. 7, in which a circular thin wall part 4b is formed, and two tiny holes 4a are formed at confronting positions on the circumference of the thin wall part 4b. Or, as shown in Fig. 8, a circular thin wall part 4b may be formed, and tiny holes 4a may be formed on the circumference of the thin wall part 4b. Meanwhile, by adjusting the thickness or length of the first thin wall part 4b, the cut-off operating pressure of the battery can be set arbitrarily.

In Fig. 3 through Fig. 8, upper side drawings are perspective views, and the section along line A-A' or line B-B' in the perspective view is shown at the lower side.

In the embodiment, a PTC thermistor element can be disposed also in the space between the cap-shaped terminal 1 and upper valve disc 2, so that excessive current can be prevented.

By the constitution of the embodiment, in the state of short-circuit, overcharging or reverse charging as mentioned above, when the battery internal pressure reaches a specified pressure, the electric connection is cut off securely. Moreover, in the event of an abnormal rise of internal pressure, the second thin wall part 2a of the upper valve disc 2 is torn apart, and the internal gas is discharged. As a result, a higher safety of the battery is assured.

Still more, by disposing a metal reinforcing plate 6 between the cap-shaped terminal 1 and upper valve disc 2, when crimping and sealing the elliptical sealing member, deformation of internal parts occurring due to pressure of the peripheral edge can be prevented.

In such battery of the embodiment using the sealing member, the cut-off operating pressure at the junction upon elevation of internal pressure of the battery is shown in Table 1. By contrast, using the conventional sealing member as shown in Fig. 11, the result of measuring the cut-off operating voltage at the junction of the battery is also shown in Table 1.

The cut-off operating voltage of the sealing members of both embodiment and prior art was set at 6 kg/cm².

**Table 1**

| Battery | Explosion-proof valve operating pressure | Fluctuations |
|---|---|---|
| Sealing plate of prior art | χ = 9.32 | χ = 2.20 |
| Sealing plate of invention | χ = 6.30 | χ = 0.30 |

Criterion: Operating pressure
-- excellent in a range of 5 to 7 kg/cm².
Fluctuations -- excellent within 0.8

As shown in Table 1, in the battery using the sealing member of the embodiment, the first thin wall part 4b including the junction 10 was securely torn apart from the lower valve disc 4. The operating pressure when tearing apart was around 6 kg/cm², which conformed to the specified cut-off operating pressure. Fluctuations of the cut-off operating pressure were small.

By contrast, the battery using the sealing member of the prior art operated at around 9 kg/cm², and the operating pressure was considerably higher than the set value, and the fluctuations were wide.

### Industrial Applicability

As described herein, the explosion-proof sealing member for thin type battery of the invention is applied to the thin type battery. When the internal pressure of the battery is elevated due to short-circuit, overcharging or reverse charging of the battery, the junction of the upper valve disc and lower valve disc is torn apart, and electric connection is cut off. As a result, conductive state due to insufficient deformation of valve disc, uneven fusion, or burr may be perfectly prevented, and electric connection can be cut off securely. Still more, the generated gas can be effectively discharged outside of the battery.

## Claims

1. A thin type battery comprising:
*(1)* a first container (101) having a first opening in an upper surface,
*(2)* an electrode (102) contained in said first container,
*(3)* an electrolyte (103) contained in said first container, and 100
*(4)* a sealing member (100),
wherein said sealing member comprises:
(a) a second container (5) made of metal having a penetration hole (7a) in a bottom surface and having a second opening in an upper surface,
(b) a lower valve disc (4) of conductive property installed at said bottom side in said second container,
(c) an electric insulating gasket (3) installed in an upper peripheral region of said lower valve disc,
(d) an upper valve disc (2) of conductive property installed at an upper side of said electric insulating gasket, and
(e) a cap-shaped terminal (1) of conductive property installed at the upper side of said upper valve disc, and installed in said second opening,
the periphery of said second container (5) is sealed by crimping by containing together each periphery of said lower valve disc (4), said electric insulating gasket (3), said upper valve disc (2), and said cap-shaped terminal (1), said upper valve disc (2) and said cap-shaped terminal (1) conduct with each other electrically, said cap-shaped terminal (1) and said second container (5) are insulated from each other electrically, said lower valve disc (4) and said second container (5) conduct with each other electrically, said lower valve disc (4) forms a first thin wall part (4b) at a position corresponding to said penetration hole (7a), said upper valve disc (2) and said lower valve disc (4) have a junction (10) electrically and integrally joining said first thin wall part (4b) and a first region (2b) of said upper valve disc (3), and
said first thin wall part (4b) including said junction (10) of said lower valve disc (4) is torn apart and separated from said lower valve disc (4) when the pressure in said first container (101) reaches a specified value, so that said upper valve disc (2) and said lower valve disc (4) are electrically insolated from each other.

2. A thin type battery of claim 1, wherein said upper valve disc (2) forms a second thin wall part (2a) in a second region, gas generated in said first container (101) passes through a first hole formed by tearing of said first thin wall part (4b) to tear apart said second thin wall part (2a), said gas passes through a second hole formed by tearing of said second thin wall part and is discharged outside of said first container (101).

3. A thin type battery of claim 2, wherein said cap-shaped terminal (1) forms a third penetration hole (1a), and said gas passes through said third penetration hole, and is discharged outside of said first container.

4. A thin type battery of claim 1, wherein said lower valve disc (4) forms a tiny hole (4a), said pressure in said first container (101) is applied to said upper valve disc through said tiny hole when said pressure reaches said specified value, said upper valve disc (2) is deformed in the outside direction by the force of said pressure, and said first thin wall part (4b) containing said junction (10) is torn apart from said lower valve disc (4) by the stress due to deformation of said upper valve disc (2).

5. A thin type battery of claim 1, wherein said lower valve disc (4) has a larger mechanical strength than said upper valve disc (2).

6. A thin type battery of claim 1, wherein said first region of said upper valve disc (2) has a recess shape (2b), the bottom of said recess shape (2b) is joined to said first thin wall part (4b) to form said junction (10), said junction of said recess shape is inverted in the direction of upper side when said pressure in said first container (101) reaches said specified value, said first thin wall part containing said junction is torn apart and separated from said lower valve disc (4) by the inverting force at this time, and thereby said upper valve disc (2) and lower valve disc (4) are electrically isolated from each other.

7. A thin type battery of claim 1, wherein said lower valve disc (4) form a tiny hole (4a) continuous to said first thin wall part (4a), at least in one position around said first thin wall part (4a), said first thin wall part (4a) containing said junction (10) is torn apart and separated from said lower valve disc (4) through said tiny hole (4a) when the pressure in said first container reaches said specified value, and thereby said upper valve disc (2) and said lower valve disc (4) are electrically isolated from each other.

8. A thin type battery of claim 1, wherein plural tiny holes (4a) are formed around said first thin wall part (4b), each one of said plural tiny holes is located at a position remote from each other, said first thin wall part (4b) containing said junction (10) is torn apart and separated from said lower valve disc (4) through said tiny holes (4a) when the pressure in said first container reaches said specified value, and thereby said upper valve disc (2) and said lower valve disc (4) are electrically isolated from each other.

9. A thin type battery of claim 1, wherein at least two penetration grooves (4a) confronting each other are formed in a region of said first thin wall part (4b), said first thin wall part containing said junction (10) is torn apart and separated from said lower valve disc (4) through said two penetration grooves when the pressure in said first container reaches said specified value, and thereby said upper valve disc (2) and said lower valve disc (4) are electrically isolated from each other.

10. A thin type battery of claim 1, wherein a conductive reinforcing plate (6) is installed between the periphery of said cap-shaped terminal (1) and the periphery of said upper valve disc (2).

11. A thin type battery of claim 1, wherein a positive characteristic thermistor element is disposed in a gap between said cap-shaped terminal (1) and said upper valve disc (2).

12. A thin type battery of claim 1, wherein said lower valve disc (4) has a larger mechanical strength than said upper valve disc (2), said upper valve disc forms a second thin wall part (2a), said first region has a recess shape, and the bottom of said recess shape (2b) is joined to said first thin wall part (4b), plural tiny holes (4a) are formed around said first thin wall part (4b), each one of said plural tiny holes is located at a position remote from each other, said recess (2b) is inverted in the outside direction by the force of said pressure when said pressure in said first container (101) reaches said specified value, said first thin wall part (4b) containing said junction (10) is torn apart from said lower valve disc (4) by the inverting stress at this time, said second thin wall part is torn apart, and gas generated in said first container passes through the hole formed by such tearing, and is discharged outside of.said first container (101).

13. A thin type battery of claim 1, wherein said upper valve disc (2) is a metal sheet.

14. A thin type battery of claim 1, wherein said lower valve disc (2) is a metal sheet.

15. A thin type battery of claim 1, wherein said first thin wall part (4b) is at least in one shape selected from the group consisting of circular shape, C-shape, ring shape, straight shape, and hemispherical shape.

## Patentansprüche

1. Dünne Batterie mit:
(1) einem ersten Gehäuse (101) mit einer ersten Öffnung in einer Deckfläche
(2) einer Elektrode (102), die in dem ersten Gehäuse enthalten ist,
(3) einem Elektrolyt (103), das in dem ersten Gehäuse enthalten ist und
(4) einem Dichtungselement (100),
wobei das Dichtungselement umfasst:
(a) ein zweites, metallisches Gehäuse (5) mit einem Durchgangsloch (7a) in einer Bodenfläche und einer zweiten Öffnung in einer Deckfläche
(b) eine untere, leitfähige Ventilscheibe (4), die an der Bodenseite in dem zweiten Gehäuse angebracht ist,
(c) eine elektrisch isolierende Dichtung (3), die an einem oberen peripheren Bereich der unteren Ventilscheibe angebracht ist,
(d) eine obere, leitfähige Ventilscheibe (2), die an einer Oberseite der elektrisch isolierenden Dichtung angebracht ist, und
(e) ein kappenförmiges, leitfähiges Abschlussbauteil (1), das an der Oberseite der oberen Ventilscheibe und in der zweiten Öffnung angebracht ist, wobei
das zweite Gehäuse (5) am äußeren Umfang durch Falzen abgedichtet ist und die untere Ventilscheibe (4), die elektrisch isolierende Dichtung (3), die obere Ventilscheibe (2) und das kappenförmige Abschlussbauteil (1) alle zusammen an ihrer Peripherie umfasst; die obere Ventilscheibe (2) und das kappenförmige Abschlussbauteil (1) elektrisch leitend miteinander verbunden sind; das kappenförmige Abschlussbauteil (1) und das zweite Gehäuse (5) gegeneinander elektrisch isoliert sind; die untere Ventilscheibe (4) und das zweite Gehäuse (5) miteinander elektrisch leitend verbunden sind; die untere Ventilscheibe (4) ein erstes Dünnwandelement (4b) an einer dem Durchgangsloch (7a) entsprechenden Lage aufweist; die obere Ventilscheibe (2) und die untere Ventilscheibe (4) ein Verbindungselement (10) haben, welches das erste Dünnwandelement (4b) sowie einen ersten Bereich (2b) der oberen Ventilscheibe (3) elektrisch leitend und fest miteinander verbindet; und
das erste Dünnwandelement (4b) einschließlich des Verbindungselements (10) der unteren Ventilscheibe (4) abgerissen und von der unteren Ventilscheibe (4) abgetrennt wird, wenn der Druck in dem ersten Gehäuse (101) einen vorgegebenen Wert erreicht, so dass die obere Ventilscheibe (2) und die untere Ventilscheibe (4) elektrisch voneinander isoliert sind.

2. Dünne Batterie nach Anspruch 1, dadurch gekennzeichnet, dass die obere Ventilscheibe (2) ein zweites Dünnwandelement (2a) in einem zweiten Bereich aufweist und das im ersten Gehäuse (101) erzeugte Gas durch ein erstes Loch hindurchströmt, welches beim Abreißen des ersten Dünnwandelements (4b) gebildet wird, um das zweite Dünnwandelement (2a) abzureißen, so dass das Gas durch ein zweites Loch hindurchströmt, welches beim Abreißen des zweiten Dünnwandelements gebildet wird, und sich außerhalb des ersten Gehäuses (101) entspannt.

3. Dünne Batterie nach Anspruch 2, dadurch gekennzeichnet, dass das kappenförmige Abschlussbauteil (1) ein drittes Durchgangsloch (1a) aufweist, und das Gas durch das dritte Durchgangsloch hindurchströmt und sich außerhalb des ersten Gehäuses entspannt.

4. Dünne Batterie nach Anspruch 1, dadurch gekennzeichnet, dass die untere Ventilscheibe (4) ein winziges Loch (4a) aufweist und der Druck im ersten Gehäuse (101) durch das winzige Loch auf die obere Ventilscheibe einwirkt, wenn der Druck einen vorgegebenen Wert erreicht, so dass die obere Ventilscheibe (2) durch die Druckkraft nach außen hin deformiert wird und das erste Dünnwandelement (4b) einschließlich des Verbindungselements (10) durch die als Folge der Deformation der oberen Ventilscheibe (2) auftretende Spannung von der unteren Ventilscheibe (4) abgerissen wird.

5. Dünne Batterie nach Anspruch 1, dadurch gekennzeichnet, dass die untere Ventilscheibe (4) eine höhere mechanische Festigkeit als die obere Ventilscheibe (2) aufweist.

6. Dünne Batterie nach Anspruch 1, dadurch gekennzeichnet, dass der erste Bereich der oberen Ventilscheibe (2) eine Ausbuchtungsform (2b) hat und der Boden der Ausbuchtung (2b) mit dem ersten Dünnwandelement (4b) verbunden ist, um das Verbindungselement (10) zu bilden, so dass dann, wenn der Druck im ersten Gehäuse (101) den vorgegebenen Wert erreicht, die Lage des Verbindungselements an der Ausbuchtung nach der oberen Seite hin invertiert wird und durch die Inversionskraft zu diesem Zeitpunkt das erste Dünnwandelement, an dem das Verbindungselemnt angebracht ist, abgerissen und von der unteren Ventilscheibe (4) separiert wird, wodurch die obere Ventilscheibe (2) und die untere Ventilscheibe (4) elektrisch voneinander isoliert sind.

7. Dünne Batterie nach Anspruch 1, dadurch gekennzeichnet, dass in der unteren Ventilscheibe (4) im Anschluss an das erste Dünnwandelement (4a) ein winziges Loch (4a) angeordnet ist, das an mindestens einer Stelle um das Dünnwandelement (4a) herumführt, und das erste Dünnwandelement (4a) einschließlich des Verbindungselements (10) durch das winzige Loch (4a) hindurch abgerissen sowie von der unteren Ventilscheibe (4) abgetrennt wird, wenn der Druck im ersten Gehäuse den vorgegebenen Wert erreicht, wodurch die obere Ventilscheibe (2) und die untere Ventilscheibe (4) elektrisch voneinander isoliert sind.

8. Dünne Batterie nach Anspruch 1, dadurch gekennzeichnet, dass mehrere winzige Löcher (4a) um das erste Dünnwandelement (4b) herum angeordnet werden, wobei alle winzigen Löcher in einem Abstand voneinander angeordnet sind, und das erste Dünnwandelement (4b) einschließlich des Verbindungselements (10) durch die winzigen Löcher (4a) abgerissen hindurch sowie von der unteren Ventilscheibe (4) abgetrennt wird, wenn der Druck im ersten Gehäuse den vorgegebenen Wert erreicht, wodurch die obere Ventilscheibe (2) und die untere Ventilscheibe (4) elektrisch voneinander isoliert sind.

9. Dünne Batterie nach Anspruch 1, dadurch gekennzeichnet, dass in einem Bereich des ersten Dünnwandelements (4b) mindestens zwei hindurchgehende, einander gegenüberstehende Kerben (4a) angeordnet sind, und das erste Dünnwandelement einschließlich des Verbindungselements (10) durch die zwei hindurchgehenden Kerben hindurch abgerissen sowie von der unteren Ventilscheibe (4) abgetrennt wird, wenn der Druck im ersten Gehäuse den vorgegebenen Wert erreicht, wodurch die obere Ventilscheibe (2) und die untere Ventilscheibe (4) elektrisch voneinander isoliert sind.

10. Dünne Batterie nach Anspruch 1, dadurch gekennzeichnet, dass eine leitfähige Verstärkungsplatte (6) zwischen dem äußeren Umfang des kappenförmigen Abschlussbauteils (1) und dem äußeren Umfang der oberen Ventilscheibe (2) angeordnet wird.

11. Dünne Batterie nach Anspruch 1, dadurch gekennzeichnet, dass ein Thermistorelement mit positiver Charakteristik in einem Zwischenraum zwischen dem kappenförmigen Abschlussbauteil (1) und der oberen Ventilscheibe (2) angebracht wird.

12. Dünne Batterie nach Anspuch 1, dadurch gekennzeichnet, dass die untere Ventilscheibe (4) eine höhere mechanische Festigkeit als die obere Ventilscheibe (2) aufweist, die obere Ventilscheibe ein zweites Dünnwandelement (2a) einschließt, der erste Bereich eine Ausbuchtungsform aufweist, der Boden der Ausbuchtung (2b) mit dem ersten Dünnwandelement (4b) verbunden ist, mehrere winzige Löcher (4a) um das erste Dünnwandelement (4b) herum angeordnet sind und jedes von ihnen einen Abstand von den anderen aufweist, die Ausbuchtung (2b) durch die Druckkraft nach außen hin invertiert wird, wenn der Druck im ersten Gehäuse (101) einen vorgegebenen Wert erreicht, das erste Dünnwandelement (4b) einschließlich des Verbindungselements (10) durch die Inversionsspannung zu diesem Zeitpunkt von der unteren Ventilscheibe (4) abgerissen wird, das zweite Dünnwandelement abgerissen wird und das im ersten Gehäuse erzeugte Gas durch das beim Abreißen erzeugte Loch ausströmt und sich außerhalb des ersten Gehäuses (101) entspannt.

13. Dünne Batterie nach Anspruch 1, dadurch gekennzeichnet, dass die obere Ventilscheibe (2) ein Metallblech ist.

14. Dünne Batterie nach Anspruch 1, dadurch gekennzeichnet, dass die untere Ventilscheibe (2) ein Metallblech ist.

15. Dünne Batterie nach Anspruch 1, dadurch gekennzeichnet, dass das erste Dünnwandelement (4b) wenigstens eine der Formen aus der Gruppe annimmt, welche die Kreisform, C - Form, Ringform, gerade Form und Halbkugelform umfasst.

## Revendications

1. Batterie de type mince comprenant :
(1) un premier récipient (101) comportant une première ouverture dans une surface supérieure,
(2) une électrode (102) contenue dans ledit premier récipient,
(3) un électrolyte (103) contenu dans ledit premier récipient, et
(4) un élément d'étanchéité (100),
dans laquelle ledit élément d'étanchéité comprend :
(a) un second récipient (5) fait de métal comportant un trou de traversée (7a) dans une surface de fond et comportant une seconde ouverture dans une surface supérieure,
(b) un disque de clapet inférieur (4) à propriété conductrice installé au niveau dudit côté de fond dans ledit second récipient,
(c) un joint d'isolement électrique (3) installé dans une région périphérique supérieure dudit disque de clapet inférieur,
(d) un disque de clapet supérieur (2) à propriété conductrice installé au niveau d'une face supérieure dudit joint d'isolement électrique, et
(e) une borne en forme de coiffe (1) à propriété conductrice installée au niveau de la face supérieure dudit disque de clapet supérieur, et installée dans ladite seconde ouverture,
la périphérie dudit second récipient (5) est scellée par sertissage en maintenant ensemble chaque périphérie dudit disque de clapet inférieur (4), dudit joint d'isolement électrique (3), dudit disque de clapet supérieur (2), et de ladite borne en forme de coiffe (1), ledit disque de clapet supérieur (2) et ladite borne en forme de coiffe (1) communiquent l'un avec l'autre électriquement, ladite borne en forme de coiffe (1) et ledit second récipient (5) sont isolés l'un de l'autre électriquement, ledit disque de clapet inférieur (4) et ledit second récipient (5) communiquent l'un avec l'autre électriquement, ledit disque de clapet inférieur (4) forme une première partie de paroi mince (4b) à un emplacement correspondant audit trou de traversée (7a), ledit disque de clapet supérieur (2) et ledit disque de clapet inférieur (4) comportent une jonction (10) reliant électriquement et de façon intégrale ladite première partie de paroi mince (4b) et une première région (2b) dudit disque de clapet supérieur (3), et
ladite première partie de paroi mince (4b) comprenant ladite jonction (10) dudit disque de clapet inférieur (4) est arrachée et séparée dudit disque de clapet inférieur (4) lorsque la pression dans ledit premier récipient (101) atteint une valeur spécifiée, de sorte que ledit disque de clapet supérieur (2) et ledit disque de clapet inférieur (4) sont électriquement isolés l'un de l'autre.

2. Batterie de type mince selon la revendication 1, dans laquelle ledit disque de clapet supérieur (2) forme une seconde partie de paroi mince (2a) dans une seconde région, le gaz généré dans ledit premier récipient (101) passe à travers un premier trou formé par la déchirure de ladite première partie de paroi mince (4b) afin d'arracher ladite seconde partie de paroi mince (2a), ledit gaz passe à travers un second trou formé par la déchirure de ladite seconde partie de paroi mince, et est évacué à l'extérieur dudit premier récipient (101).

3. Batterie de type mince selon la revendication 2, dans laquelle ladite borne en forme de coiffe (1) forme un troisième trou de traversée (1a), et ledit gaz passe par ledit troisième trou de traversée, et est évacué à l'extérieur dudit premier récipient.

4. Batterie de type mince selon la revendication 1, dans laquelle ledit disque de clapet inférieur (4) forme un petit trou (4a), ladite pression dans ledit premier récipient (101) est appliquée audit disque de clapet supérieur par l'intermédiaire dudit petit trou lorsque ladite pression atteint ladite valeur spécifiée, ledit disque de clapet supérieur (2) est déformé en direction de l'extérieur par la force de ladite pression, et ladite première partie de paroi mince (4b) contenant ladite jonction (10) est arrachée dudit disque de clapet inférieur (4) par la contrainte due à la déformation dudit disque de clapet supérieur (2).

5. Batterie de type mince selon la revendication 1, dans laquelle ledit disque de clapet inférieur (4) présente une plus grande résistance mécanique que ledit disque de clapet supérieur (2).

6. Batterie de type mince selon la revendication 1, dans laquelle ladite première région dudit disque de clapet supérieur (2) présente une forme en évidement (2b), le dessous de ladite forme en évidement (2b) est réuni à ladite première partie de paroi mince (4b) afin de former ladite jonction (10), ladite jonction de ladite forme en évidement est inversée en direction de la face supérieure lorsque ladite pression dans ledit premier récipient (101) atteint ladite valeur spécifiée, ladite première partie de paroi mince contenant ladite jonction est arrachée et séparée dudit disque de clapet inférieur (4) par la force d'inversion à cet instant, et grâce à quoi lesdits disque de clapet supérieur (2) et disque de clapet inférieur (4) sont électriquement isolés l'un de l'autre.

7. Batterie de type mince selon la revendication 1, dans laquelle ledit disque de clapet inférieur (4) forme un petit trou (4a) contigu à ladite première partie de paroi mince (4b), au moins en un emplacement autour de ladite première partie de paroi mince (4b), ladite première partie de paroi mince (4b) contenant ladite jonction (10) est arrachée et séparée dudit disque de clapet inférieur (4) par l'intermédiaire dudit petit trou (4a) lorsque la pression dans ledit premier récipient atteint ladite valeur spécifiée, et grâce à quoi ledit disque de clapet supérieur (2) et ledit disque de clapet inférieur (4) sont électriquement isolés l'un de l'autre.

8. Batterie de type mince selon la revendication 1, dans laquelle plusieurs petits trous (4a) sont formés autour de ladite première partie de paroi mince (4b), chacun desdits plusieurs petits trous est situé à un emplacement distant des autres, ladite première partie de paroi mince (4b) contenant ladite jonction (10) est arrachée et séparée dudit disque de clapet inférieur (4) par l'intermédiaire desdits petits trous (4a) lorsque la pression dans ledit premier récipient atteint ladite valeur spécifiée, et grâce à quoi ledit disque de clapet supérieur (2) et ledit disque de clapet inférieur (4) sont électriquement isolés l'un de l'autre.

9. Batterie de type mince selon la revendication 1, dans laquelle au moins deux rainures de traversée (4a) en regard l'une de l'autre sont formées dans une région de ladite première partie de paroi mince (4b), ladite première partie de paroi mince contenant ladite jonction (10) est arrachée et séparée dudit disque de clapet inférieur (4) par l'intermédiaire desdites deux rainures de traversée lorsque la pression dans ledit premier récipient atteint ladite valeur spécifiée, et grâce à quoi ledit disque de clapet supérieur (2) et ledit disque de clapet inférieur (4) sont électriquement isolés l'un de l'autre.

10. Batterie de type mince selon la revendication 1, dans laquelle une plaque de renfort conductrice (6) est installée entre la périphérie de ladite borne en forme de coiffe (1) et la périphérie dudit disque de clapet supérieur (2).

11. Batterie de type mince selon la revendication 1, dans laquelle un élément de thermistance à caractéristique positive est disposé dans un interstice entre ladite borne en forme de coiffe (1) et ledit disque de clapet supérieur (2).

12. Batterie de type mince selon la revendication 1, dans laquelle ledit disque de clapet inférieur (4) présente une plus grande résistance mécanique que ledit disque de clapet supérieur (2), ledit disque de clapet supérieur forme une seconde partie de paroi mince (2a), ladite première région comporte une forme en évidement, et le dessous de ladite forme en évidement (2b) est réuni à ladite première partie de paroi mince (4b), plusieurs petits trous (4a) sont formés autour de ladite première partie de paroi mince (4b), chacun desdits plusieurs petits trous est situé à un emplacement distant des autres, ledit évidement (2b) est inversé en direction de l'extérieur par la force de ladite pression lorsque ladite pression dans ledit premier récipient (101) atteint ladite valeur spécifiée, ladite première partie de paroi mince (4b) contenant ladite jonction (10) est arrachée dudit disque de clapet inférieur (4) par la contrainte d'inversion à cet instant, ladite seconde partie de paroi mince est arrachée, et du gaz généré dans ledit premier récipient passe par le trou formé par une telle déchirure, et est évacué à l'extérieur dudit premier récipient (101).

13. Batterie de type mince selon la revendication 1, dans laquelle ledit disque de clapet supérieur (2) est une feuille métallique.

14. Batterie de type mince selon la revendication 1, dans laquelle ledit disque de clapet inférieur (4) est une feuille métallique.

15. Batterie de type mince selon la revendication 1, dans laquelle ladite première partie de paroi mince (4b) présente au moins une forme sélectionnée parmi le groupe constitué d'une forme circulaire, d'une forme en C, d'une forme en anneau, d'une forme droite, et d'une forme hémisphérique.
